# EUROPEAN PATENT APPLICATION

(11) **EP 4 379 146 A1**
(43) Date of publication of application: **05.06.2024**
(21) Application number: 22911044.0
(22) Date of filing: 14.12.2022
(51) Int. Cl.: E02F 9/16, E02F 9/18, E02F 9/24

(54) **WORK VEHICLE**

(30) Priority: 23.12.2021 JP 2021209465
(71) Applicant: Hitachi Construction Machinery Co., Ltd., Tokyo 110-0015 (JP)
(72) Inventor: ITOU Yoshihiro, Tsuchiura-shi, Ibaraki 300-0013 (JP); MORITA Yoshitada, Tsuchiura-shi, Ibaraki 300-0013 (JP)
(74) Representative: Manitz Finsterwald Patent- und Rechtsanwaltspartnerschaft mbB
(86) International application number: PCT/JP2022/046097
(87) International publication number: WO 2023/120336

(57) **Abstract**

To provide a work vehicle in which a rearward detection device can be mounted on a rear end of a vehicle body without impairing operability of a towing pin. The work vehicle includes: a vehicle body; a counterweight that defines a rear end of the vehicle body; a towing pin that is held in a towing pin holding hole formed in the counterweight in a state where the towing pin is removable upwardly, the towing pin being engageable with a towing jig for towing another vehicle; and a rearward detection device that detects an object existing behind the vehicle body. The rearward detection device includes: a bracket that is supported by a counterweight above the towing pin that is held in a towing pin holding hole; a support plate that is supported by the bracket; and an object detection device that is supported by the support plate. The support plate is configured to be retractable in a manipulation direction of the towing pin when the towing pin is manipulated.

## Description

### TECHNICAL FIELD

The present invention relates to a work vehicle that includes a towing pin and a rearward detection device.

### BACKGROUND ART

With respect to a work vehicle used on a terrain, there is a case where a work vehicle is required to tow another vehicle. To cope with such a case, there has been known a work vehicle that includes a towing pin that is supported by a center of a rear portion of a vehicle body in a vehicle width direction in an insertable and removable manner and engages with a wire for towing another vehicle (Patent literature 1).

There also exists a work vehicle on which a camera for imaging an area behind a vehicle body of the work vehicle is mounted. With such a configuration, an operator in an operator's cabin can check a situation behind a vehicle body. Patent literature 1 discloses the configuration in which a wide angle camera is mounted on an upper portion of a rear side of the vehicle body in a state where the camera is mounted in an obliquely downwardly inclined manner so that the camera can perform imaging in a wide range from a rear end of the vehicle body (a near distance) to the area behind the vehicle body (a far distance). As a detection device for detecting a situation behind a vehicle body, besides the camera described in the patent literature 1, there may be a case where a millimeter wave radar, a light detection and ranging (LiDAR) device or the like is used for detecting the presence or the non-presence of an object (for example, an obstacle, a worker, another vehicle) behind the vehicle body.

### CITATION LIST

### PATENT LITERATURE

Patent Literature 1: Japanese Unexamined Patent Application Publication No. 2012-184600

### SUMMARY OF INVENTION

### TECHNICAL PROBLEM

In a case where a detection device that is not compatible with a detection range (imaging range) of a large angle is mounted on the vehicle body in consideration of ease of accessibility and a cost, to detect an area behind the vehicle body (a far distance) from a rear end of a vehicle (a near distance) using one detection device, it is desirable that a detection device is disposed on a counterweight that forms the rear end of the vehicle body and the detection direction is set in a substantially horizontal direction. However, the towing pin is mounted on the counterweight. Accordingly, in a case where an attempt is made to mount the rearward detection device within a limited size of the vehicle body, there is a concern that the rearward detection device hinders the insertion or the removal of the towing pin.

The present invention has been made in view of the above-mentioned circumstances, and it is an object of the present invention to provide a work vehicle in which a rearward detection device can be mounted on a rear end of a vehicle body without impairing operability of a towing pin.

### SOLUTION TO PROBLEM

To solve the problem, the present invention has configurations described such that a work vehicle includes:
a vehicle body; a counterweight that defines a rear end of the vehicle body; and a towing pin that is held in a towing pin holding hole formed in the counterweight in a state where the towing pin is removable upwardly, the towing pin being engageable with a towing jig for towing another vehicle. The work vehicle further includes a rearward detection device that detects an object existing behind the vehicle body. The rearward detection device includes: a bracket that is supported by the counterweight above the towing pin held in the towing pin holding hole; a support plate that is supported by the bracket; and an object detection device that is supported by the support plate. The support plate is configured to be retractable in a manipulation direction of the towing pin when the towing pin is manipulated.

### ADVANTAGEOUS EFFECTS OF INVENTION

According to the present invention, it is possible to provide a work vehicle in which a rearward detection device can be mounted on a rear end of a vehicle body without impairing operability of a towing pin.

Incidentally, problems, configurations, and effects other than those described above will be clarified by the following description of embodiments.

### BRIEF DESCRIPTION OF DRAWINGS

Fig. 1 is a side view of a wheel loader according to an embodiment.
Fig. 2 is a perspective view of a main part of the wheel loader as viewed from a rear side.
Fig. 3 is a perspective view of a counterweight as viewed from a front side.
Fig. 4 is a back view of the wheel loader.
Fig. 5 is a perspective view of a rearward detection device as viewed from a rear side.
Fig. 6 is a perspective view of the rearward detection device as viewed from a front side.
Fig. 7 is a cross sectional view of a lock mechanism.

### DESCRIPTION OF EMBODIMENTS

Hereinafter, with reference to drawings, a wheel loader 10 that is one example of a work vehicle according to the present invention is described. In the specification, unless otherwise particularly specified, "front", "rear", "left" and "right" are determined using a viewing point of a worker who rides on the wheel loader 10 and manipulates the wheel loader 10. A specific example of the work vehicle is not limited to the wheel loader 10, and the work vehicle may be a dump truck, a hydraulic excavator, a crane vehicle or the like.

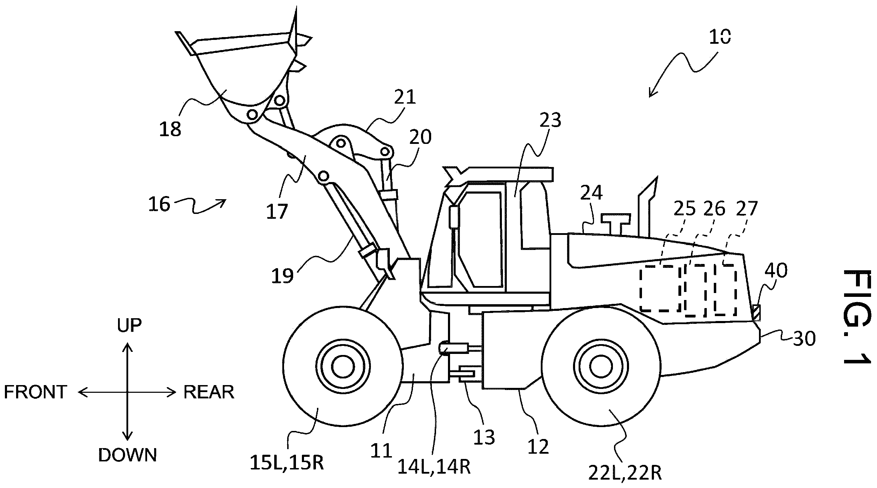

Fig. 1 a side view of the wheel loader 10 according to the present embodiment. As illustrated in Fig. 1, the wheel loader 10 has a vehicle body formed of a front frame 11 and a rear frame 12. The front frame 11 and the rear frame 12 are rotatably connected to each other in a lateral direction by a center pin 13. Further, the front frame 11 and the rear frame 12 are connected to each other by a pair of left and right steering cylinders 14L, 14R. The pair of steering cylinders 14L, 14R extends and retracts with the supply of a hydraulic oil from a hydraulic pump (not illustrated in the drawing).

Out of the pair of steering cylinders 14L, 14 R, by extending one steering cylinder and retracting other steering cylinder, the front frame 11 is bent in the lateral direction with respect to the rear frame 12 about the center pin 13. With such an operation, a relative mounting angle between the front frame 11 and the rear frame 12 is changed so that the vehicle body is bent and the direction of the vehicle body changes. That is, the wheel loader 10 is of an articulated type wheel loader in which the front frame 11 and the rear frame 12 are bent about the center pin 13.

The front frame 11 supports a pair of left and right front tires 15L, 15R, and a front working device 16. The front working device 16 includes a lift arm 17, a bucket 18, a pair of lift arm cylinders 19, a bucket cylinder 20 and a bell crank 21.

The lift arm 17 extends in the longitudinal direction. To be more specific, a front end of the lift arm 17 is rotatably connected to the bucket 18, and a rear end of the lift arm 17 is rotatably connected to the front frame 11. The lift arm 17 rotates in a vertical direction (performs an upward and downward tilting) by extension and retraction of the pair of lift arm cylinders 19.

The bucket 18 has a recessed space capable of accommodating a load (such as soil and sands). The bucket 18 is rotatably (tiltably or dumpably) supported by a front end of the lift arm 17. More specifically, the bucket 18 is rotated in a vertical direction due to the rotation of a bell crank 21 brought about by extension or retraction of the bucket cylinder 20.

The rear frame 12 supports a pair of left and right rear tires 22L, 22R, a cab 23 (an operator's cabin), an engine grilled compartment 24 (grilled compartment), and a counterweight 30.

An inner space in which an operator who manipulates the wheel loader 10 is seated is formed in the cab 23. In the inside of the cab 23, a seat (not illustrated in the drawing) on which the operator is seated, and a manipulation device (not illustrated in the drawing) that the operator seated on the seat manipulates are disposed. When the operator seated in the cab 23 manipulates the manipulation device, the wheel loader 10 travels and the front working device 16 is operated.

The engine grilled compartment 24 is supported by the rear frame 12 behind the cab 23 and in front of a rearmost end of the counterweight 30. The engine grilled compartment 24 has an inner space that accommodates constitutional components for driving the wheel loader 10 (for example, an engine 25, a radiator 26, and a cooling fan 27).

The engine 25 generates a drive force for operating the wheel loader 10. By transmitting the drive force of the engine 25, front tires 15L, 15R and rear tires 22L, 22R are rotated. With such an operation, the wheel loader 10 travels. The radiator 26 supplies cooling water to the engine 25, cooling water discharged from the engine 25 is subjected to a heat exchange with cooling air, and cooling water that is subjected to the heat exchange is returned to the engine 25 again. The cooling fan 27 supplies cooling air to the radiator 26.

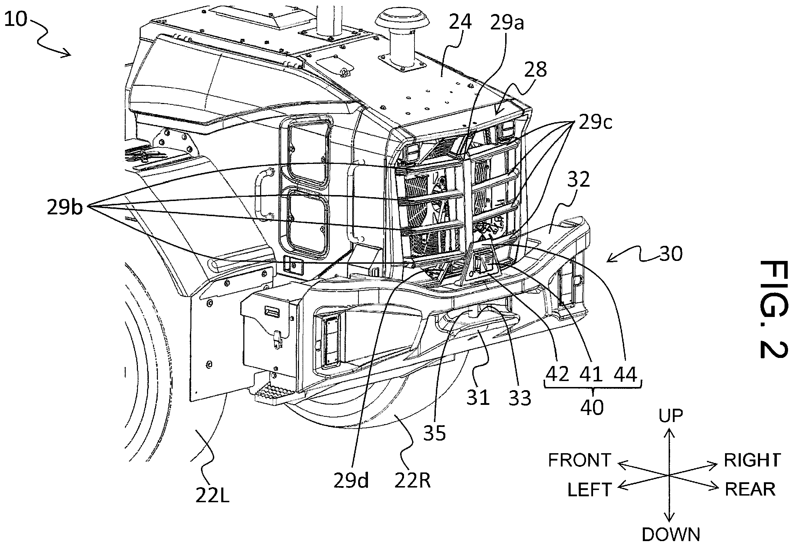

Fig. 2 is a perspective view of a main part of the wheel loader 10 as viewed from a rear side. As illustrated in Fig. 2, a rear grill 28 is mounted on a back surface of the engine grilled compartment 24. The rear grill 28 allows the communication of air between the outside of the wheel loader 10 and the inner space of the engine grilled compartment 24. More specifically, the rear grill 28 includes a center pillar 29a, a plurality of left side beams 29b, a plurality of right side beams 29c, and a plurality of inclined beams 29d. With such a configuration, the rear grill 28 allows the circulation of air through gaps formed between the center pillar 29a, the plurality of left side beams 29b, the plurality of right side beams 29c, and the plurality of inclined beams 29d.

The center pillar 29a extends in the vertical direction at the center of the vehicle body in a vehicle width direction (a lateral direction). The plurality of left side beams 29b respectively extend from a left surface of the center pillar 29a toward a left side at positions spaced apart from each other in a vertical direction. The plurality of right side beams 29c respectively extend from a right surface of the center pillar 29a toward a right side at positions spaced apart from each other in a vertical direction. The inclined beam 29d extends obliquely in a leftward and downward direction from the lowermost left side beam 29b. Further, although not illustrated in the drawing, the rear grill 28 may include the inclined beam 29d that extends obliquely in a rightward and downward direction from the lowermost right side beam 29c.

The counterweight 30 is an example of a defining member that defines a rear end of the wheel loader 10 (the rear frame 12). In this embodiment, the defining member is the counterweight 30 (a heavy object) that is provided for taking a weight balance with the front working device 16.

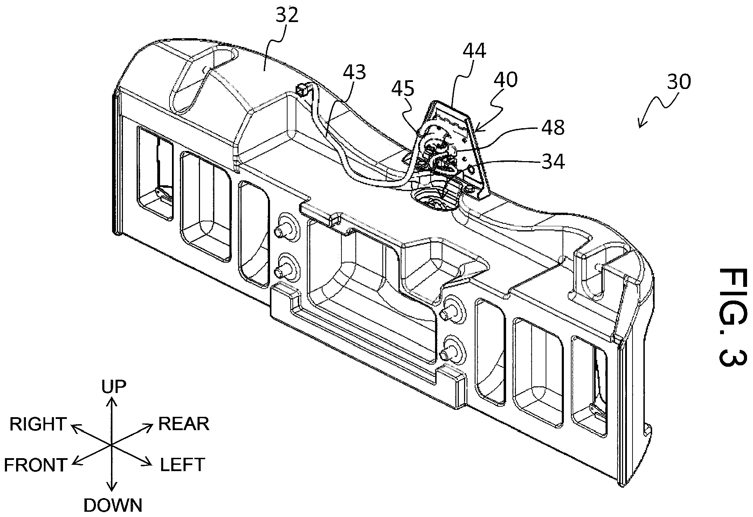

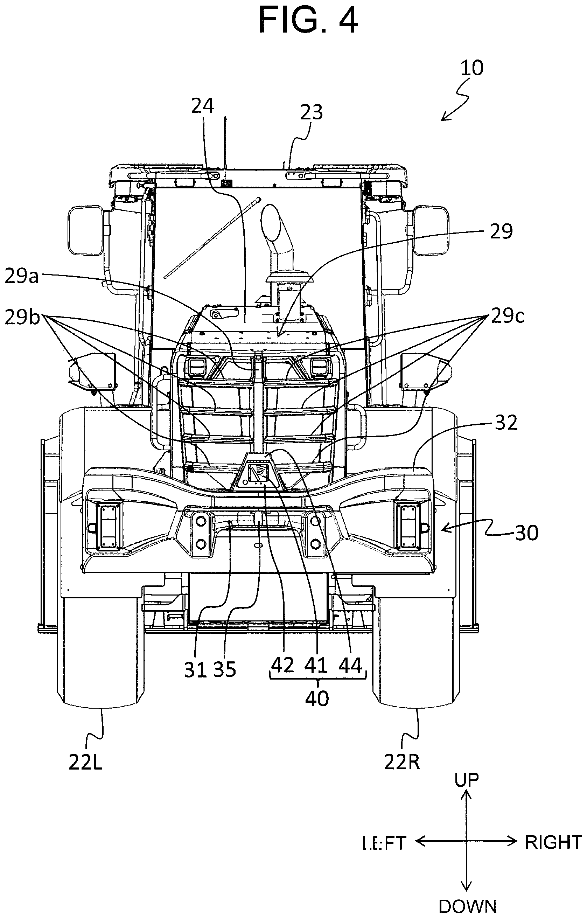

Fig. 3 is a perspective view of the counterweight 30 as viewed from a front side. Fig. 4 is a back view of the wheel loader 10. As illustrated in Fig. 1 and Fig. 2, a rear end of the counterweight 30 is positioned at a rearmost side among constitutional components of the wheel loader 10. Further, as illustrated in Fig. 2 and Fig. 4, the counterweight 30 is disposed over an entire region of the rear frame 12 in a vehicle width direction. The counterweight 30 is positioned in a region in which at least the rear grill 28 is disposed within the rear frame 12 in a vehicle width direction and below the rear grill 28. As illustrated in Fig. 2 to Fig. 4, the counterweight 30 includes a support base 31 and a bumper 32.

The support base 31 is disposed at the center of the counterweight 30 in the vehicle width direction. The support base 31 is disposed below the bumper 32 and in front of a rear end of the bumper 32. A towing pin holding hole 33 that opens upward is formed in an upper surface of the support base 31. The towing pin holding hole 33 holds a towing pin 35 described later in a state where the towing pin 35 is insertable and removable into and from the towing pin holding hole 33 in a vertical direction.

The bumper 32 extends in the lateral direction over an entire region of the counterweight 30 in the vehicle width direction. The bumper 32 is disposed above the support base 31 and behind the support base 31. Further, a rear end of the bumper 32 is disposed on a rearmost side of the counterweight 30 (that is, one constitutional element among the constitutional components of the wheel loader 10), and an object that approaches the wheel loader 10 firstly impinges on the rear end of the bumper 32.

A gap is formed between the support base 31 and the bumper 32 in a vertical direction. The gap formed between the support base 31 and the bumper 32 is exposed to an area behind the wheel loader 10. A wire (a towing jig) that engages with the towing pin 35 held in the towing pin holding hole 33 is extended to an area behind the wheel loader 10 through the gap.

As illustrated in Fig. 3, a towing pin insertion hole 34 is formed in the bumper 32 in a vertically penetrating manner. The towing pin holding hole 33 and the towing pin insertion hole 34 are formed at a position in which the towing pin holding hole 33 and the towing pin insertion hole 34 overlap with each other as viewed in a vertical direction. That is, the towing pin 35 is vertically insertable and removable with respect to the towing pin holding hole 33 through the towing pin insertion hole 34.

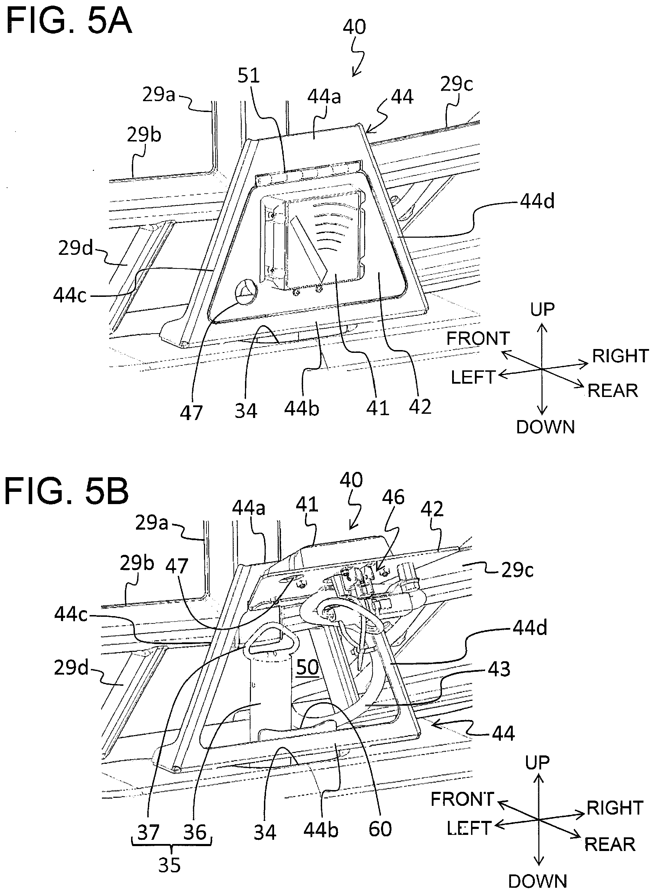

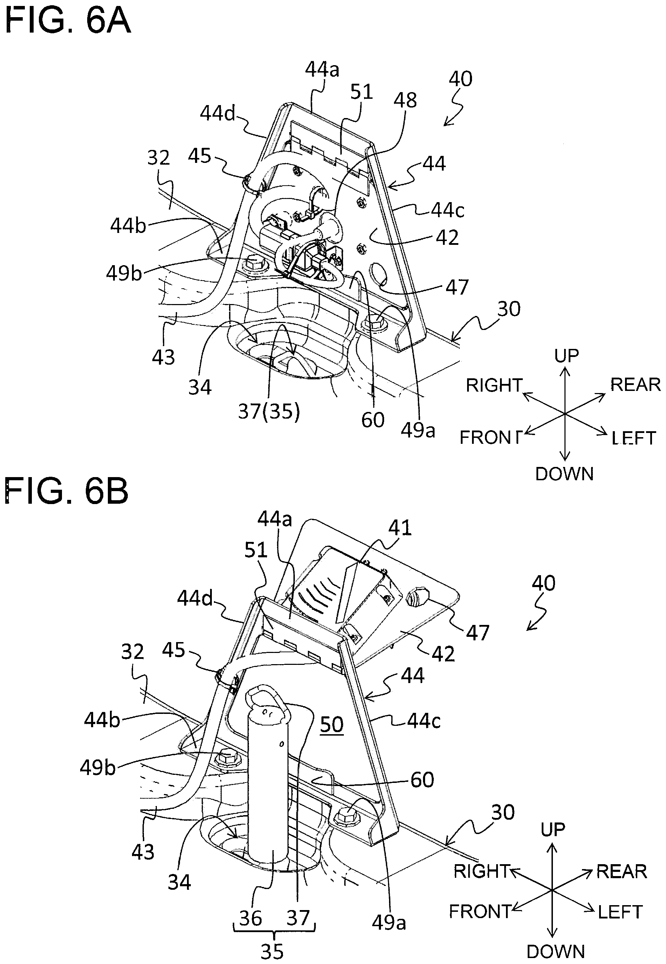

The towing pin 35 is used in a state where the towing pin 35 engages with a wire provided to another vehicle when the wheel loader 10 tows another vehicle. As illustrated in Fig. 5(B) and Fig. 6 (B), the towing pin 35 is formed of a pin body 36 having a circular columnar shape, and a grip portion 37 that is mounted on an upper end of the pin body 36. The towing pin 35 is inserted into or removed from the towing pin holding hole 33 through the towing pin insertion hole 34 in a state where a portion of the towing pin 35 on a grip portion 37 side forms an upper end portion of the towing pin 35.

First, when an operator who grips the grip portion 37 pushes down the towing pin 35 in the towing pin insertion hole 34, a lower end portion of the towing pin 35 is inserted into the towing pin holding hole 33. As a result, the towing pin 35 is supported by the support base 31. At this stage of the operation, a portion of the pin body 36 passes through the gap formed between the support base 31 and the bumper 32 in a vertical direction, and is exposed to an area behind the wheel loader 10. The grip portion 37 is accommodated in the towing pin insertion hole 34 below an upper end of the bumper 32.

On the other hand, when the operator who grips the grip portion 37 pulls up the towing pin 35 in the towing pin insertion hole 34, a lower end portion of the towing pin 35 is removed from the towing pin holding hole 33. As a result, a gap is formed between the support base 31 and the towing pin 35 in the vertical direction. The operator can make a wire engage (latch) with the pin body 36 through the gap. Then, the operator pushed down the towing pin 35 again so that the towing pin 35 with which the wire engages is supported by the support base 31. In the operation of making the wire engage with the towing pin 35, it is not necessary to pull up the towing pin 35 to a position in which the towing pin 35 is completely removed from the towing pin insertion hole 34. That is, it is sufficient to pull up the towing pin 35 in the upward direction by forming an amount of gap that allows the insertion of the wire between the support base 31 and the towing pin 35.

As illustrated in Fig. 1, the wheel loader 10 according to the present embodiment further includes a rearward detection device 40. The rearward detection device 40 detects an object positioned behind the wheel loader 10 (for example, an obstacle, an operator, another vehicle), and outputs a detection signal indicating the result of the detection to a controller (not illustrated in the drawing) via a harness 43 (see Fig. 3). The controller notifies the operator in the cab 23 of the presence of the object based on the detection signal outputted from the rearward detection device 40.

As illustrated in Fig. 1, the rearward detection device 40 is disposed in front of a rear end of the counterweight 30 and behind constitutional components (including the engine grilled compartment 24) of the wheel loader 10 except for the counterweight 30. More specifically, as illustrated in Fig. 5(A) and Fig. 6(A), in a case where a support plate 42 described later is detectable, the rear end of a millimeter wave radar 41 described later is disposed in front of the rear end of the counterweight 30 and behind the engine grilled compartment 24. Further, as illustrated in Fig. 2 to Fig. 4, the rearward detection device 40 is supported by an upper surface of the bumper 32 at the center of the counterweight 30 in the vehicle width direction and behind the towing pin insertion hole 34.

Further, in a state where the wheel loader 10 is viewed from a rear side as illustrated in Fig. 4, the rearward detection device 40 is disposed such that the rearward detection device 40 overlaps with a portion of the rear grill 28. More specifically, an external profile line of the rearward detection device 40 (a bracket 44 described later) overlaps with a portion of the plurality of beams 29b to 29d of the rear grill 28 (more specifically, the left and right inclined beams 29d).

Further, as illustrated in Fig. 4, the rearward detection device 40 is disposed at the same position as the towing pin 35 held by the towing pin holding hole 33 in the vehicle width direction of the wheel loader 10 (that is, the center of the wheel loader 10 in the vehicle width direction). On the other hand, the rearward detection device 40 is disposed, with respect to the height direction (vertical direction) of the wheel loader 10, above the towing pin 35 held by the towing pin holding hole 33 (more specifically, the gap between the support base 31 from which the towing pin 35 is exposed and the bumper 32).

That is, even in a state where the rearward detection device 40 is mounted, it is possible to make the wire engage with the towing pin 35. On the other hand, the rearward detection device 40 that is disposed at the position illustrated in Fig. 4 obstructs an insertion/removal operation of the towing pin 35 with respect to the towing pin holding hole 33. This problem becomes particularly conspicuous in a small sized wheel loader in which it is necessary to shorten a distance between the rear grill 28 and the rearward detection device 4.

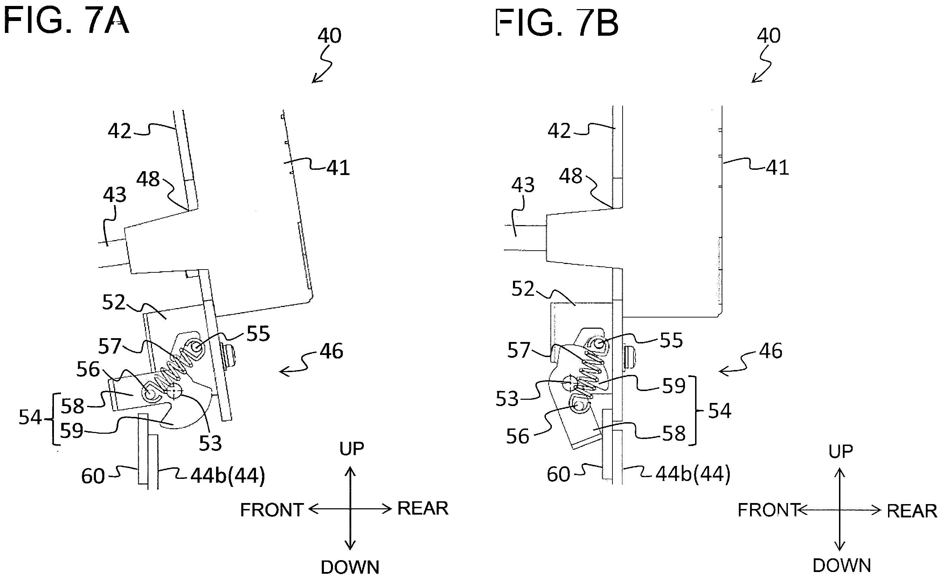

Fig. 5 is a perspective view of the rearward detection device 40 as viewed from a rear side. Fig. 6 is a perspective view of the rearward detection device 40 as viewed from a front side. Fig. 7 is a cross sectional view of a lock mechanism 46. As illustrated in Fig. 5 to Fig. 7, the rearward detection device 40 includes a millimeter wave radar 41, a support plate 42, a harness 43, a bracket 44, a harness holding portion 45, and the lock mechanism 46.

The millimeter wave radar 41 is an object detection device (sensor) that detects an object existing behind the wheel loader 10. The millimeter wave radar 41 outputs a millimeter wave rearward and receives the millimeter wave reflected by the object. However, a specific example of the object detection device is not limited to a millimeter wave radar 41 and may be a camera, a stereoscopic camera, a LiDAR and the like.

The support plate 42 is a plate shaped member that supports the millimeter wave radar 41. The support plate 42 has a trapezoidal shape that corresponds to a shape of an opening 50 formed in a bracket 44 described later. The support plate 42 is supported by the bracket 44 in a rotatable (movable, changeable) manner. Further, in the support plate 42, a support plate manipulation hole 47 that penetrates the support plate 42 in a thickness direction is formed in the support plate 42 at a position that differs from a position in which the millimeter wave radar 41 is supported. The support plate manipulation hole 47 is a portion in which a finger of an operator is inserted at the time of rotating the support plate 42.

The millimeter wave radar 41 is mounted on a back surface (a surface that faces an area behind the wheel loader 10 when the millimeter wave radar 41 is in a detection capable state) of the support plate 42 at the center of the support plate 42. When the support plate 42 is in a detection capable state (Fig. 5(A)), a surface of the millimeter wave radar 41 that outputs and receives a millimeter wave is exposed to a region on a side behind the wheel loader 10. The harness 43 is pulled out toward an area on a side in front of the wheel loader 10 through the penetration hole 48 that penetrates the support plate 42 in a thickness direction.

The bracket 44 is supported by the counterweight 30 above and behind the towing pin 35 held by the towing pin holding hole 33. The bracket 44 according to the present embodiment is fixed (fastened) to an upper surface of the bumper 32 by bolts 49a, 49b at both sides of the towing pin insertion hole 34 in the vehicle width direction of the wheel loader 10. The bracket 44 supports the support plate 42 for supporting the millimeter wave radar 41 between a detection capable state indicated in Fig. 5(A) and Fig. 6 (A) and a retraction state indicated in Fig. 5(B) and Fig. 6(B) in a rotatable (movable, changeable) manner.

The bracket 44 is a frame having a trapezoidal shape that is formed of: an upper side 44a and a lower side 44b that are parallel to each other; a left side 44c that connects a left end of the upper side 44a and a left end of the lower side 44b; and a right side 44d that connects a right end of the upper side 44a and a right end of the lower side 44b. In the vehicle width direction of the wheel loader 10, a size of the upper side 44a is set shorter than a size of the lower side 44b. When the wheel loader 10 is viewed from a rear side, the bracket 44 is supported by the bumper 32 such that the left side 44c and the right side 44d overlap with the left and right inclined beams 29d. Further, as illustrated in Fig. 3, a surface of the bracket 44 that is fixed (fastened) to an upper surface of the bumper 32 by bolts 49a, 49b is cut away so as to open an upper side of the towing pin holding hole 33 and an upper side of the towing pin insertion hole 34.

An opening 50 is formed in the bracket 44 in a state where the opening 50 penetrates the bracket 44 in a thickness direction (a longitudinal direction of the wheel loader 10). The opening 50 is a space having a trapezoidal shape that is surrounded by the upper side 44a, the lower side 44b, the left side 44c and the right side 44d. The bracket 44 supports the support plate 42 that supports the millimeter wave radar 41 by way of a hinge 51 fixed to a lower end of the upper side 44a. That is, the support plate 42 that supports the millimeter wave radar 41 is configured to be rotatable about a rotation axis extending in the vehicle width direction of the wheel loader 10 by the hinge 51.

A harness holding portion 45 is mounted on the bracket 44. The harness holding portion 45 according to the present embodiment is disposed on a front surface side of the right side 44d (that is, a position avoiding the center of the opening 50). The harness holding portion 45 is disposed at the substantially center of the right side 44d in the vertical direction. The harness holding portion 45 is a through hole that penetrates the right side 44d for fixing a harness holding member (for example, a binding band). The harness 43 is supported by the bracket 44 at the position avoiding the center of the opening 50 by being fastened to the harness holding member that is fixed to the harness holding portion 45. Further, the harness holding member that is fixed to the harness holding portion 45 holds the harness 43 with a fastening force to an extent that the harness 43 is movable in the longitudinal direction following the rotation of the support plate 42 that supports the millimeter wave radar 41.

As illustrated in Fig. 5(A) and Fig. 6(A), in a state where the support plate 42 is brought into a detection capable state, the opening 50 formed in the bracket 44 is closed by the support plate 42. That is, the detection capable state of the support plate 42 is a state where the opening 50 is closed (that is, a state where a manipulation of the towing pin 35 by an operator through the opening 50 is prevented). The millimeter wave radar 41 that is supported by the support plate 42 on a detection capable state is disposed behind the wheel loader 10 and, at the same time, is disposed behind a surface (an antenna surface) and is directed in a horizontal direction such that the millimeter wave radar 41 can output a millimeter wave using the horizontal direction as the center and can receive the millimeter wave reflected from an object. That is, the detection capable state of the support plate 42 is a state that allows the millimeter wave radar 41 to detect an object existing behind the wheel loader10. The detection capable state of the support plate 42 may be also referred to as a position (a detection capable position) of the support plate 42 in which the manipulation of the towing pin 35 is prevented and, at the same time, the millimeter wave radar 41 can detect an object.

Next, an operator who intends to manipulate the towing pin 35 inserts his/her finger into the support plate manipulation hole 47 illustrated in Fig. 5(A) and Fig. 6(A), and pulls up the support plate 42 rearward and upward. As a result, the support plate 42 rotates from a detection capable state illustrated in Fig. 5(A) and Fig. 6(A) to a retraction state illustrated in Fig. 5(B) and Fig. 6(B) such that the support plate 42 is so as to flip up itself rearward and upward. At this stage of the operation, the harness 43 is pulled out rearward following the support plate 42.

With such operations, as illustrated in Fig. 5(B) and Fig. 6(B), the opening 50 is opened when the support plate 42 is in a retraction state. That is, the retraction state of the support plate 42 is a state where the opening 50 is opened (in other words, a state where the manipulation of the towing pin held by the towing pin holding hole 33 is allowed). The support plate 42 in the retraction state supports the millimeter wave radar 41 such that the surface (the antenna surface) of the millimeter wave radar 41 is directed upward. That is, the retraction state of the support plate 42 is the state where the millimeter wave radar 41 cannot detect an object existing behind the wheel loader 10. However, provided that the opening 50 is opened so that the manipulation of the towing pin 35 is allowed, the retraction state of the support plate 42 may also be a state where an object behind the wheel loader 10 can be detected by the millimeter wave radar 41. The retraction state of the support plate 42 may be also referred to the position (retraction position) of the support plate 42 in which an operator is allowed to manipulate the towing pin 35 through the opening 50 formed in the bracket 44 from behind the wheel loader 10.

Next, the operator grips the grip portion 37 and pulls up the grip portion 37 upward through the opening 50 in a state where the support plate 42 is held in a retraction state. Next, the operator winds the wire to around the towing pin 35 through the gap formed between the support base 31 and the lower end of the towing pin 35. Next, the operator grips the grip portion 37 and pushes down the grip portion 37 downward through the opening 50. Accordingly, the towing pin 35 in a state where the wire engages with the towing pin 35 is held in the towing pin holding hole 33. Further, when the operator lets his/her hand off from the support plate 42, the support plate 42 is automatically brought into a detection capable state due to gravity. The above-mentioned series of operations may be performed by a single operator or may be performed by a plurality of operators.

The lock mechanism 46 is a mechanism that locks the support plate 42 on which the millimeter wave radar 41 is supported in a detection capable state. The lock mechanism 46 is mounted on a front surface of the support plate 42 (a surface of the support plate 42 that is directed toward a front side of the wheel loader 10 is in a detection capable state) at a position that corresponds to a lower side 44b that opposedly faces the upper side 44a to which the hinge 51 is fixed. As illustrated in Fig. 7, the lock mechanism 46 is constituted of a fixing block 52, a pivot shaft 53, a lock arm 54, spring fixing shafts 55,56, and a coil spring 57(a biasing member).

The fixing block 52 is disposed below the millimeter wave radar 41, and is fixed to a front surface of the support plate 42 (a surface on a side opposite to a support surface for the millimeter wave radar 41). The pivot shaft 53 is fixed to a side surface of the fixing block 52 in a state where the pivot shaft 53 is disposed in an extending manner in a vehicle width direction of the wheel loader 10. The lock arm 54 is rotatably supported by the pivot shaft 53. The spring fixing shaft 55 is fixed to a side surface of the fixing block 52 to which the pivot shaft 53 is fixed. The coil fixing shaft 56 is fixed to the lock arm 54. In this embodiment, as viewed from the extending direction of the pivot shaft 53, the spring fixing shaft 56 s disposed at a position closer to the pivot shaft 53 than the spring fixing shaft 55. One end of the coil spring 57 is fixed to the spring fixing shaft 55, and the other end of the coil spring 57 is fixed to the spring fixing shaft 56.

The lock arm 54 has a lock lug 58 and an engaging pawl 59. The lock arm 54 rotates about the pivot shaft 53 between an unlocked posture illustrated in Fig. 7(A) and a locked posture illustrated in Fig. 7 (B). The unlocked posture is a posture of the lock arm 54 in which a rotation trajectory of the lock lug 58 is disposed above (inside) a lock plate 60 disposed on a lower side 44b, and a rotation trajectory of the engaging pawl 59 is disposed below (outside) the lock plate 60. The locked posture is a posture of the lock arm 54 in which the rotation trajectory of the lock lug 58 is below (outside) the lock plate 60 and the rotation trajectory of the engaging pawl 59 is above (inside) the lock plate 60.

Further, the coil spring 57 biases the lock arm 54 toward either a non-locked posture or a locked posture in response to a positional relationship with the pivot shaft 53. In other words, the direction of the biasing force of the lock arm 54 generated by the coil spring 57 is switched due to the rotation of the lock arm 54 as described below. As viewed from an extending direction of the pivot shaft 53, as the coil spring 57 approaches the pivot shaft 53, a biasing force of the coil spring 57 is increased (that is, the coil spring 57 is elongated).

As illustrated in Fig. 7(A), when the support plate 42 is disposed between a detection capable state and a retraction state, the coil spring 57 biases the lock arm 54 toward a non-locked posture. That is, as viewed from an extending direction of the pivot shaft 53, when the coil spring 57 passes the pivot shaft 53 in the first direction (a clockwise direction in an example illustrated in Fig. 7), the coil spring 57 biases the lock arm 54 toward a non-locked posture.

When the support plate 42 is made to approach a detection capable state from a state illustrated in Fig. 7(A), the engaging pawl 59 engages with a back surface of the lock plate 60 and hence, the lock arm 54 rotates in a second direction (in a counterclockwise direction in the example illustrated in Fig. 7) against a biasing force of the coil spring 57. Then, as viewed in the extending direction of the pivot shaft 53, when the coil spring 57 passes the pivot shaft 53 in a counterclockwise direction, the coil spring 57 biases the lock arm 54 toward a locked posture (that is, the direction of a biasing force of the coil spring 57 is switched). Accordingly, as illustrated in Fig. 7(B), at a timing that the support plate 42 is brought into a detection capable state, the lock arm 54 takes a locked posture. As a result, the support plate 42 is brought into contact with the back surface of the lock plate 60, and the lock lug 58 is brought into contact with the front surface of the lock plate 60 so that the support plate 42 is locked in a detection capable state.

Further, an external force is applied to the support plate 42 so as to make the support plate 42 approach to a retraction state from the state illustrated in Fig. 7(B). More specifically, an operator puts his/her finger in the support plate manipulation hole 47 and pulls the support plate 42 in a back surface direction, the lock arm 54 rotates in the clockwise direction against a biasing force of the coil spring 57 by a reactional force that the lock lug 58 receives from the lock plate 60. Then, when the coil spring 57 passes the pivot shaft 53 in a clockwise direction, the coil spring 57 biases the lock arm 54 to a non-locked posture (that is, the direction of a biasing force of the coil spring 57 is switched). Accordingly, a rotation trajectory of the lock lug 58 moves above the lock plate 60 so that locking by the lock mechanism 46 is released. As a result, the operator can rotate the support plate 42 to a retraction state.

According to the above-mentioned embodiment, the configuration is adopted where the posture of the support plate 42 that supports the millimeter wave radar 41 can be changed between a detection capable state and a retraction state. Accordingly, when the wheel loader 10 is operated (when the wheel loader 10 is travelling or when the wheel loader 10 is performing a work using the front working device 16), an area behind the wheel loader 10 can be monitored. Further, it is possible to prevent the rearward detection device 40 from obstructing an operation of an operator who inserts or removes the towing pin 35. As a result, it is possible to provide the wheel loader 10 that can mount the rearward detection device 40 on the rear end of the vehicle body without impairing the operability of the towing pin 35.

Further, according to the above-mentioned embodiment, the support plate 42 is locked in a detection capable state by the lock mechanism 46. Accordingly, it is possible to prevent the support plate 42 from inadvertently rotating toward a retraction state due to vibrations or the like generated at the time of operating the wheel loader 10. Further, by adopting the lock mechanism 46 having the configuration illustrated in Fig. 7, a locking operation and a locking release operation of the millimeter wave radar 41 can be simplified. However, provided that the support plate 42 can be locked in a detection capable state, the specific configuration of the lock mechanism 46 is not limited to the example illustrated in Fig. 7.

Further, according to the above-mentioned embodiment, with respect to the constitutional components of the wheel loader 10, by disposing the rearward detection device 40 behind all constitutional components except for the counterweight 30, an area behind the rearward detection device 40 is opened and hence, the rearward detection device 40 can ensure a wide monitoring area behind the wheel loader 10. (That is, the millimeter wave is not interrupted by vehicle body mounting components). In a case where a rear portion of the vehicle body and an object existing behind the vehicle body are brought into contact with each other, the object is brought into contact with the bumper 32 that protrudes rearward from the vehicle body than the millimeter wave radar 41 and hence, a load applied to the millimeter wave radar 41 can be reduced whereby the occurrence of failure in the rearward detection device 40 can be prevented. Further, the millimeter wave radar 41 can be arranged at the position suitable for rearward monitoring without changing a longitudinal length of the vehicle body.

Further, according to the above-mentioned embodiment, the upper side 44a of the bracket 44 that overlaps with the cooling fan 27 as viewed in the air supply direction (the vehicle body longitudinal direction) is formed shorter than the lower side 44b of the bracket 44 that does not overlap with the cooling fan 27 as viewed from the air supply direction (vehicle body longitudinal direction) of the cooling fan 27, and the left side 44c and the right side 44d of the bracket 44 overlap with the inclined beams 29d. With such a configuration, it is possible to reduce an air supply resistance of the cooling fan 27 that is generated by disposing the rearward detection device 40 behind the cooling fan 27. Further, by making the lower side 44b of the bracket 44 long, a distance between the bolts 49a, 49b can be expanded. Accordingly, the rearward detection device 40 can be supported by the bumper 32 in a stable manner. Further, the millimeter wave radar 41 is disposed at the position close to a ground. Accordingly, compared to a case where the millimeter wave radar 41 is mounted on an upper portion of the engine grilled compartment 24, a wiping-out operation of dust adhering to the millimeter wave radar 41 can be easily performed.

Further, in the above-mentioned embodiment, the harness 43 is held at the position avoiding the center of the opening 50. Accordingly, the opening 50 that is formed in the bracket 44 for an operation of inserting into or removing the towing pin 35 from the towing pin holding hole 33 without removing the harness 43 from the millimeter wave radar 41 can ensure a large area.

In the above-mentioned embodiment, the description has been made with respect to the example where the millimeter wave radar 41 is rotated using the upper side 44a of the bracket 44 as a base end of the rotation. However, a method of moving the support plate 42 between a detection capable state and a retraction state is not limited to the previously mentioned example. As another embodiment, the millimeter wave radar 41 may be configured such that the millimeter wave radar 41 is rotatable by way of a hinge mounted on the lower side 44b, the left side 44c, or the right side 44d. Further, as another example, the millimeter wave radar 41 may be configured such that the millimeter wave radar 41 is slidable in the vertical direction or in the lateral direction with respect to the bracket 44.

In the above-mentioned embodiment, the description has been made with respect to the case where the posture of the support plate 42 is changed between the detection capable state and the retraction state. However, the configuration that enables or disenables monitoring of an area behind the wheel loader 10 by the rearward detection device 40 and the configuration that enables or disenables an operation of the towing pin 35 are not limited to the above-mentioned examples. As another example, the rearward detection device 40 may be detachably configured with respect to the vehicle body (more specifically, the counterweight 30). That is, the support plate 42 may be configured to retractable in the manipulation direction (the rearward and upward direction in the present embodiment) of the towing pin 35 when the towing pin 35 is manipulated.

The above-mentioned embodiment is provided for an exemplifying purpose for describing the present invention, and is not intended to limit the range of the present invention to only these embodiments. Those who are skilled in the art can carry out the present invention in various other modes without departing from the gist of the present invention.

### REFERENCE SIGNS LIST

- 10: wheel loader (work vehicle)
- 11: front frame (vehicle body)
- 12: rear frame (vehicle body)
- 13: center pin
- 14L, 14R: steering cylinder
- 15L, 15R: front tire
- 16: front working device
- 22L, 22R: rear tire
- 23: cab
- 24: engine grilled compartment
- 25: engine
- 26: radiator
- 27: cooling fan
- 28: rear grill
- 30: counterweight
- 31: support base
- 32: bumper
- 33: towing pin holding hole
- 34: towing pin insertion hole
- 35: towing pin
- 36: pin body
- 37: grip portion
- 40: rearward detection device
- 41: millimeter wave radar (object detection device)
- 42: support plate
- 43: harness
- 44: bracket
- 45: harness holding portion
- 46: lock mechanism
- 47: support plate manipulation hole
- 48: through hole
- 49a, 49b: bolt
- 50: opening
- 51: hinge
- 52: fixing block
- 53: pivot shaft
- 54: lock arm
- 55, 56: spring fixing shaft
- 57: coil spring
- 58: lock lug
- 59: engaging pawl
- 60: lock plate

## Claims

1. A work vehicle comprising:
a vehicle body;
a counterweight that defines a rear end of the vehicle body; and
a towing pin that is held in a towing pin holding hole formed in the counterweight in a state where the towing pin is removable upwardly, the towing pin being engageable with a towing jig for towing another vehicle,
the work vehicle further comprising a rearward detection device that detects an object existing behind the vehicle body, wherein
the rearward detection device includes:
a bracket that is supported by the counterweight above the towing pin held in the towing pin holding hole;
a support plate that is supported by the bracket; and
an object detection device that is supported by the support plate, and
the support plate is configured to be retractable in a manipulation direction of the towing pin when the towing pin is manipulated.

2. The work vehicle according to claim 1, wherein
the support plate is configured to be changeable between
a detection capable state where a manipulation of the towing pin is prevented and the object detection device is allowed to detect an object that exists in an area behind the vehicle body, and
a retraction state where the manipulation of the towing pin is allowed, and
the rearward detection device includes a lock mechanism that fix the support plate in the detection capable state.

3. The work vehicle according to claim 2, wherein
an opening that allows manipulation of the towing pin is formed in the bracket, and
the support plate closes the opening in a case of the detection capable state, and opens the opening in a case of the retraction state.

4. The work vehicle according to claim 2, further comprising:
a grilled compartment that is supported by the vehicle body in front of a rear end of the counterweight, wherein
a rear end of the object detection device is disposed in front of a rear end of the counterweight and behind the grilled compartment in a case where the support plate is in the detection capable state.

5. The work vehicle according to claim 4, further comprising:
a rear grill mounted on a rear portion of the grilled compartment, the grill being configured to allow air to pass through a gap formed between a plurality of beams that are disposed in a spaced apart manner from each other, wherein
an external profile line of the bracket overlaps with a portion of the plurality of beams of the rear grill as viewed in a longitudinal direction.

6. The work vehicle according to claim 5, wherein
a size of an upper portion of the bracket in a vehicle width direction is shorter than a size of a lower portion of the bracket that is supported by the counterweight in the vehicle width direction.

7. The work vehicle according to claim 1, further comprising:
a controller configured to receive a signal that the object detection device outputs; and
a harness that connects the object detection device and the controller to each other, wherein
the bracket includes a harness holding portion that holds the harness.
